# FASCICULE DE BREVET EUROPEEN

(11) **EP 4 060 580 B1**
(45) Date de publication et mention de la délivrance du brevet: **24.01.2024**
(21) Numéro de dépôt: 22161357.3
(22) Date de dépôt: 10.03.2022
(51) Int. Cl.: G06Q 10/0836, G06Q 50/28

(54) **PROCÉDÉ ET SYSTÈME POUR LE DÉPÔT ET LE RETRAIT D'UN COLIS PAR UN LIVREUR**
VERFAHREN UND VORRICHTUNG ZUM HINTERLEGEN UND ABHOLEN EINES PAKETS DURCH EINEN POSTBOTEN
METHOD AND SYSTEM FOR DROPPING OFF AND COLLECTING A PARCEL BY A DELIVERY PERSON

(30) Priorité: 15.03.2021 FR 2102540
(43) Date de publication de la demande: 21.09.2022
(73) Titulaire: Societe Renz Sarl, 57915 Woustviller (FR)
(72) Inventeur: SUPERNAT, Thierry, 57670 NEBING (FR); BABAEIZADEH MALMIRY, Roozbeh, 57070 METZ (FR)
(74) Mandataire: Cabinet Nuss

(56) Documents cités:
- EP-A1- 3 716 170

## Description

La présente invention concerne le domaine de la livraison et des retraits de colis et a pour objet un procédé et un système de dépôt ou de retrait d'un colis par un livreur dans un ensemble collectif de boîtes à colis, préférentiellement un ensemble mixte de boîtes à lettres et de boîtes à colis, installé dans un espace clos.

La norme européenne CEN/TS 17457 de juillet 2020 définit de manière large les contours d'une solution multi-fabricants et multi-opérateurs de livraison de colis.

Une solution pratique dénommée « OPEN » a été développée en France par collaboration de plusieurs acteurs dans le domaine des produits et services dans le domaine susvisé.

Ce développement a abouti à un procédé de dépôt ou de retrait d'un colis par un livreur autorisé dans un ensemble collectif de boîtes à colis, préférentiellement un ensemble mixte de boîtes à lettres et de boîtes à colis, équipé d'une unité de gestion. Ce procédé consiste essentiellement à autoriser temporairement l'accès à une boîte à colis de cet ensemble pour le dépôt ou le retrait d'un colis par la transmission d'un code d'accès unique, et préférentiellement à durée de validité limitée, ce immédiatement après identification d'un livreur autorisé au niveau dudit ensemble. La transmission du code n'a lieu qu'après réalisation d'un protocole automatique d'authentification ou d'accréditation dudit livreur et cette transmission est effectuée simultanément vers un moyen de communication portable consultable par le livreur autorisé et vers l'unité de gestion dudit ensemble.

Or, dans la plupart des cas et plus particulièrement dans les immeubles d'habitations à résidents multiples, un tel ensemble de boîtes à colis est généralement situé dans un espace clos accessible depuis l'extérieur par une porte ou un moyen de fermeture analogue équipé d'un moyen de verrouillage à commande électrique, notamment une porte d'entrée d'un immeuble par exemple.

Il en résulte un obstacle déjà connu pour une livraison ou un retrait rapide et garanti, indépendant(e) du destinataire ou résident concerné et du colis à déposer et à retirer.

Par le document EP 3 716 170, on connait un procédé correspondant au préambule de la revendication 1. Toutefois, dans ce procédé le code d'accès est lié à la commande, et donc au colis, et/ou au destinataire, est généré par le site marchand et sa fourniture au livreur n'est pas conditionnelle en termes de localisation de ce dernier.

La présente invention a pour but principal de surmonter l'obstacle et les limitations précités, et de proposer une solution pouvant si possible s'intégrer harmonieusement dans le cadre du développement précité, et présentant un niveau de sécurité augmenté.

A cet effet, l'invention concerne un procédé présentant les caractéristiques de la revendication 1.

L'invention vise également des systèmes pour la mise en oeuvre du procédé précité présentant les caractéristiques de la revendication 7 ou de la revendication 8.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] représente symboliquement et schématiquement un procédé et un système de dépôt ou de retrait d'un colis dans un ensemble collectif de boîtes à colis selon un premier mode de réalisation de l'invention, et,
[Fig. 2] représente symboliquement et schématiquement un procédé et un système de dépôt ou de retrait d'un colis dans un ensemble collectif de boîtes à colis selon un second mode de réalisation de l'invention.

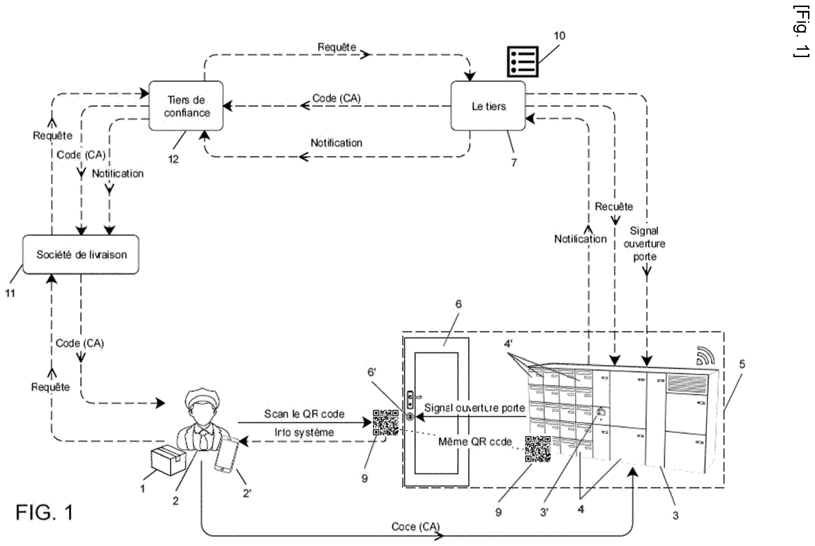

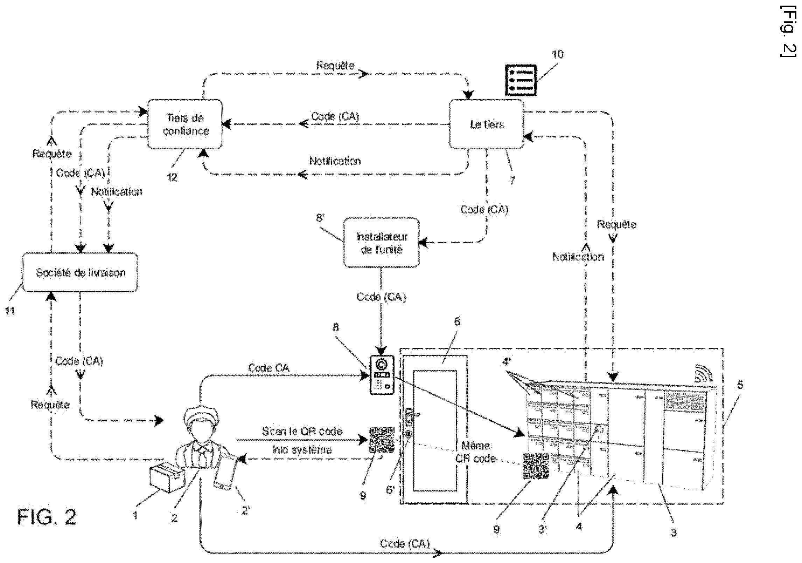

Les figures 1 et 2 illustrent un procédé et un système de dépôt ou de retrait d'un colis (1) par un livreur autorisé (2) dans un ensemble collectif (3) de boîtes à colis (4), préférentiellement un ensemble mixte de boîtes à lettres (4') et de boîtes à colis (4), équipé d'une unité de gestion (3'), ledit ensemble (3) étant situé dans un espace clos (5) accessible depuis l'extérieur par une porte (6) ou un moyen de fermeture analogue équipé d'un moyen de verrouillage à commande électrique (6'), notamment une porte d'entrée d'un immeuble.

Ce procédé consiste essentiellement à autoriser temporairement l'accès à une boîte à colis (4) de cet ensemble (3) pour le dépôt ou le retrait d'un colis (1) par la transmission d'un code d'accès (CA) unique, et préférentiellement à durée de validité limitée, ce immédiatement après identification et/ou localisation d'un livreur autorisé (2) à proximité de ladite porte (6) ou dudit ensemble (3). Ce code (CA) est produit et transmis par un tiers (7) extérieur, non lié au livreur (2) et choisi dans le groupe formé par le fabricant, le gestionnaire et le propriétaire dudit ensemble (3). La transmission du code (CA) n'a lieu qu'après réalisation d'un protocole automatique d'authentification ou d'accréditation dudit livreur (2) et est effectuée simultanément vers un moyen de communication portable (2') consultable par le livreur (2) autorisé et vers l'unité de gestion (3') dudit ensemble (3).

Conformément à l'invention, la transmission du code d'accès temporaire (CA) est utilisée pour le déverrouillage de la porte (6) ou analogue, ce déverrouillage étant soit commandé automatiquement par l'unité de gestion (3') à réception dudit code, et vérification de la présence du livreur (2) autorisé au niveau ou à proximité de ladite porte (6), soit commandé par une unité (8) de contrôle du moyen de verrouillage (6') après fourniture à cette unité (8) dudit code (CA) par le livreur (2) ou par son moyen de communication portable (2'), cette unité (8) ayant également réceptionné préalablement le même code transmis par le tiers extérieur (7), par exemple le fabricant ou l'installateur de l'ensemble (3).

Ainsi, sans modifier la solution développée et en utilisant avantageusement le code (CA) mis en oeuvre par celle-ci, l'invention permet de faciliter le travail du livreur (2) sans remettre en cause le fonctionnement de la solution développée précédemment, ni son niveau de sécurité, et en y intégrant l'ouverture de la porte (6).

En outre, comme indiqué l'ouverture de la porte (6) peut, en fonction notamment de la présence ou non d'une unité (8) de contrôle du moyen de verrouillage (6') de cette porte, être réalisée de manière automatique (figure 1) ou nécessiter une action du livreur (figure 2).

L'unité (8) peut par exemple se présenter sous la forme d'un interphone, auquel le code (CA) est transmis par l'installateur ou le gestionnaire (8') de cette unité, par exemple un interphoniste.

En accord avec deux variantes possibles de mises en oeuvre de ce procédé selon l'invention, le protocole d'authentification ou d'accréditation d'un livreur (2) concerné par le dépôt ou le retrait d'un colis (1) dans l'ensemble (3) considéré, et débouchant normalement sur la transmission d'un code d'accès (CA) au moins à cet ensemble (3) et au moyen de communication portable (2') dudit livreur (2), et éventuellement aussi à l'unité (8) de contrôle du moyen de verrouillage (6') de la porte (6), est déclenché :
- 1) soit par la géolocalisation du livreur (2) au niveau ou à proximité de l'emplacement géographique de l'ensemble (3) ou de la porte (6),
- 2) soit par l'envoi de l'image d'une information visuelle cryptée (9), telle qu'un QR code, présente au niveau de la porte (6), par le moyen de communication portable (2') du livreur (2).

En utilisant un code d'ouverture (CA) qui a une validité temporaire, qui n'est pas lié au colis, ni au destinataire, qui est généré par un tiers de confiance non lié au livreur et qui est transmis « à la minute » au livreur dont la position sur site est préalablement confirmée, l'invention fournit un procédé de dépôt ou de retrait de colis hautement sécurisé, mais également efficient et pratique, lorsque le même code sert à l'ouverture du local et de la boîte à colis visée.

L'expression « au niveau ou à proximité de » signifie que le livreur (2) se trouve devant la porte ou préférentiellement est à une distance suffisamment proche pour pouvoir ouvrir la porte (par poussée ou manoeuvre d'une poignée), ou alors passer la porte, lorsque cette dernière est à ouverture automatique.

En variante, la géolocalisation peut aussi servir à l'orientation locale du livreur (2) par affichage sur son moyen de communication portable (2') des différents ensembles (3) de boîtes à colis (4) situés dans le voisinage, le déverrouillage de la porte (6) donnant accès à l'ensemble (3) concerné par l'opération de livraison ou de dépôt en cours n'étant effective que lorsque le livreur (2) arrive à proximité immédiate de la porte (6) correspondante ou lorsque le livreur aura sélectionné l'ensemble (3) concerné parmi les différentes propositions d'ensembles.

Dans le premier cas 1), ni la présence d'une information lisible au niveau de la porte (6), ni une quelconque intervention positive du livreur (2) n'est nécessaire pour déverrouiller la porte. Dans le premier cas 1), il peut être prévu que la géolocalisation soit éventuellement confirmée par une détection de présence locale effective dudit livreur (2) devant la porte (6) considéré (par exemple détection radio du terminal (2')).

Afin d'aboutir à une sécurisation supplémentaire dans le second cas 2), il peut être prévu que l'envoi du code (CA) soit en outre (c'est-à-dire en plus de l'envoi de l'image d'une information visuelle cryptée locale par le livreur) conditionné à une géolocalisation du livreur (2) au niveau ou à proximité de ladite porte (6).

En vue de permettre une sélection des organismes de livraison (sites marchands, organismes postaux, sociétés de livraison, ...), le protocole d'authentification ou d'accréditation d'un livreur (2) concerné par le dépôt ou le retrait d'un colis (1) dans l'ensemble collectif (3) considéré peut comprendre une étape de vérification de l'acceptation dudit livreur (2) par le(s) propriétaire(s), le gestionnaire et/ou les résidents du bâtiment logeant ledit ensemble collectif (3) concerné par l'opération de livraison ou de dépôt, le dépôt ou le retrait d'un colis (1) n'étant éventuellement autoriser que durant une fenêtre temporelle quotidienne limitée, le cas échéant modifiable ou variable.

A titre d'exemple, cette étape de vérification de l'acceptation d'un livreur (2) peut être réalisée par consultation d'une liste ou d'une base de données (10) tenue à jour par le tiers (7) extérieur non lié au livreur (2) et choisi dans le groupe formé par le fabricant, le gestionnaire et le propriétaire dudit ensemble (3).

En accord avec une réalisation préférée en accord avec la norme et le développement indiqués en introduction, les étapes automatiques d'authentification ou d'accréditation d'un livreur (2) et de transmission d'un code d'accès unique (CA), déclenchées par géolocalisation du livreur (2) concerné et/ou par l'envoi par ce dernier de l'image d'une information visuelle cryptée (9) présente au niveau de la porte (6), sont basées sur des échanges entre la société (11) de livraison, liée au livreur (2) et communicant avec ce dernier, et le tiers (7) extérieur choisi dans le groupe formé par le fabricant, le gestionnaire et le propriétaire dudit ensemble (3).De plus, ces échanges transitent par un tiers de confiance (12) distinct et indépendant de la société de livraison (11) et du tiers extérieur (7), s'effectuent en temps réel et mettent en oeuvre des interfaces de programmation d'applications (API), le code (CA) transmis étant préférentiellement à usage unique.

En général, les échanges entre les différentes entités extérieures (7, 11, 12) intervenant dans le procédé sont de nature bidirectionnelle et comprennent des envois de requêtes auxquels répondent des notifications en retour, le cas échéant avec envoi simultané ou séparé de code.

De manière avantageuse, il peut être prévu que le code d'accès (CA) utilisée pour le déverrouillage de la porte (6) ou analogue autorise également l'accès à l'ensemble collectif (3) de boîtes à colis (4), notamment pour la sélection de la boîte (4) concernée par l'opération de dépôt ou de retrait, cet accès étant concédé soit automatiquement (l'unité de contrôle -interphone- de la porte étant alors reliée à l'unité de gestion de l'ensemble), soit par fourniture spécifique (saisie ou transmission sans fil par le moyen de communication portable du livreur-« smartphone ») dudit code (CA) à l'unité de gestion (3') dudit ensemble (3), l'opération de dépôt ou de retrait devant le cas échéant être réalisée dans un délai déterminé (par exemples quelques minutes) après déverrouillage de la porte (6) ou analogue.

Conformément à une autre caractéristique de l'invention, le procédé peut aussi consister, en cas de besoin ou d'attribution d'une boîte à colis (4) spécifique de l'ensemble (3) pour la réalisation d'une opération de dépôt ou de retrait d'un colis particulier, à réserver cette boîte à colis (4) spécifique et à produire un code (CA) antérieurement à l'identification et/ou à la localisation d'un livreur autorisé (2) à proximité de ladite porte (6), ladite réservation de cette boîte (4) spécifique et la production du code (CA) précité n'ayant toutefois lieu qu'après exécution favorable dudit protocole automatique d'authentification ou d'accréditation du livreur (2). Par exemple dans le cas d'une livraison d'un colis réfrigéré, la réservation préalable d'une boîte (4) adéquate pourra être requise.

Deux exemples de réalisation pratiques du procédé selon l'invention sont décrits ci-après en relation avec les figures 1 et 2 annexées.

Ainsi et en relation avec la figure 1, le procédé peut comprendre les étapes suivantes :
- le livreur scanne le QR Code OPEN de la porte d'entrée avec son « smartphone »
- le « smartphone » demande au service informatique de la société de livraison un code d'ouverture ou d'accès
- le système informatique de la société de livraison demande un code au tiers de confiance
- ce dernier retransmet la demande au fabricant/propriétaire/gestionnaire de l'ensemble de boîtes à colis concerné
- ce dernier envoie le code d'ouverture au tiers de confiance et à l'ensemble de boîtes à colis, ce dernier étant doté d'une unité de commande de gâche électrique d'ouverture de porte, ouvre la porte d'entrée
- le tiers de confiance envoie le code au système informatique de la société de livraison qui le renvoie au livreur
- le livreur (qui est maintenant rentré dans le hall logeant l'ensemble de boîtes à colis) utilise le code pour accéder à l'unité de gestion de l'ensemble sans « rescanner ».

En variante et en relation avec la figure 2, le procédé peut comprendre les étapes suivantes :
- le livreur scanne le QR Code spécifique de la porte d'entrée avec son « smartphone »
- le « smartphone » demande au service informatique de la société de livraison employant le livreur, un code d'ouverture ou d'accès
- le système informatique de la société de livraison demande un code au tiers de confiance
- le tiers de confiance retransmet la demande au fabricant/propriétaire/gestionnaire de l'ensemble de boîtes à colis concerné
- ce dernier envoie le code d'ouverture au tiers de confiance, à l'interphoniste (car le fabricant/propriétaire/gestionnaire sait que l'immeuble logeant l'ensemble est doté d'une interphonie compatible), qui le retransmet à l'interphone concerné, et à cet ensemble
- le tiers de confiance envoie le code au système informatique de la société de livraison qui le renvoie au livreur
- le livreur saisit le code sur l'interphonie
- la porte s'ouvre (gâche électrique)
- le livreur utilise le même code pour accéder à l'ensemble de boîtes à colis sans « rescanner ».

La communication entre le livreur (2) et l'unité de gestion (3') pour réaliser le dépôt ou le retrait peut se dérouler selon des protocoles variés, bien connus de l'homme du métier.

L'invention vise également un système de dépôt ou de retrait d'un colis (1) par un livreur autorisé (2) dans un ensemble collectif (3) de boîtes à colis (4), préférentiellement un ensemble mixte de boîtes à lettres (4') et de boîtes à colis (4), ce système comprenant une pluralité d'ensembles collectifs (3) équipé chacun d'une unité de gestion (3') contrôlant notamment l'accès à chacune des boîtes (4) de l'ensemble (3) correspondant, chaque ensemble (3) étant situé dans un espace clos (5) accessible depuis l'extérieur par une porte (6) ou un moyen de fermeture analogue à moyen de verrouillage électrique (6'), notamment une porte d'entrée d'un immeuble.

Les boîtes à colis (4) peuvent être présentes en nombre variables et en tailles différentes, et présenter ou non des aménagements particuliers : boîtes réfrigérés, boîtes pour suspension d'habits, boîtes à accès spécifique pour personnes handicapées, boîtes à structure renforcée, etc.

Ce système est configuré pour la mise en oeuvre d'un procédé consistant à autoriser temporairement l'accès à une boîte à colis (4) d'un ensemble (3) déterminé pour le dépôt ou le retrait d'un colis (1) par la transmission d'un code d'accès (CA) unique et à durée de validité limitée, ce immédiatement après identification et/ou localisation d'un livreur autorisé (2) à proximité de la porte (6) ou de l'ensemble (3) concerné, ledit code (CA) étant produit et transmis par un tiers (7) extérieur non lié au livreur (2) et choisi dans le groupe formé par le fabricant, le gestionnaire et le propriétaire dudit ensemble (3), la transmission du code (CA) n'ayant lieu qu'après réalisation d'un protocole automatique d'authentification ou d'accréditation dudit livreur (2) et étant effectuée simultanément vers un moyen de communication portable (2') consultable par le livreur (2) autorisé et vers l'unité de gestion (3') dudit ensemble (3).

Selon une première variante (figure 1), ce système est configuré pour la mise en oeuvre du procédé décrit ci-dessus, avec l'unité de gestion (3') qui est reliée de manière filaire au moyen de verrouillage électrique (6') de la porte (6), et le déverrouillage de cette dernière qui est commandé automatiquement par cette unité de gestion (3') à réception du code (CA) adéquat, et après éventuelle vérification de la présence du livreur (2) autorisé au niveau de ladite porte.

Selon une seconde variante (figure 2), ce système est configuré pour la mise en oeuvre du procédé décrit ci-dessus et comprend, au niveau de la porte (6) associée à chaque ensemble (3), une unité (8) de contrôle du moyen de verrouillage (6') équipée d'une interface de réception dudit code (CA) saisi par le livreur (2) ou transmis par son moyen de communication portable (2'), cette unité (8) étant également configuré pour réceptionner le même code transmis par le tiers extérieur (7).

En relation avec la seconde variante, et pour éviter une seconde opération de contrôle d'accès avec nécessité de scannage d'un QR-code ou de saisie d'un code par le livreur (2), il peut être prévu que le système comprenne un canal de communication, filaire ou sans fil, entre l'unité (8) de contrôle du moyen de verrouillage (6') de la porte (6), par exemple sous la forme d'un interphone, et l'unité de gestion (3') de l'ensemble (3), notamment pour la transmission d'un message d'autorisation d'accès à une boîte à colis (4), cette autorisation d'accès présentant préférentiellement une durée de validité limitée.

Toutefois, pour sécuriser au maximum l'accès à l'ensemble (3), il peut aussi être prévu, de manière alternative et dans toutes les variantes de réalisation ci-dessus, une deuxième seconde opération de contrôle d'accès avec nécessité de scannage d'un QR-code ou de saisie d'un code par le livreur (2), préférentiellement le même que celui présent ou utilisé au niveau de la porte (6).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de dépôt ou de retrait d'un colis (1) par un livreur autorisé (2) dans un ensemble collectif (3) de boîtes à colis (4), préférentiellement un ensemble mixte de boîtes à lettres (4') et de boîtes à colis (4), équipé d'une unité de gestion (3'), ledit ensemble (3) étant situé dans un espace clos (5) accessible depuis l'extérieur par une porte (6) ou un moyen de fermeture analogue équipé d'un moyen de verrouillage à commande électrique (6'), notamment une porte d'entrée d'un immeuble, ledit procédé consistant à autoriser temporairement l'accès à une boîte à colis (4) de cet ensemble (3) pour le dépôt ou le retrait d'un colis (1) par la transmission d'un code (CA) unique, la transmission du code (CA) n'ayant lieu qu'après réalisation d'un protocole automatique d'authentification ou d'accréditation dudit livreur (2), et la transmission du code (CA) étant utilisée pour le déverrouillage de la porte (6) ou analogue, procédé **caractérisé**
- **en ce que** ledit code (CA) est un code d'accès, à durée de validité limitée et produit et transmis par un tiers (7) extérieur non lié au livreur (2) et choisi dans le groupe formé par le fabricant, le gestionnaire et le propriétaire dudit ensemble (3),
- **en ce que** la transmission dudit code d'accès (CA) est effectuée simultanément vers un moyen de communication portable (2') consultable par le livreur (2) autorisé et vers l'unité de gestion (3') dudit ensemble (3), ce immédiatement après identification et/ou localisation dudit livreur autorisé (2) à proximité de ladite porte (6) ou dudit ensemble (3),
- **en ce que** le déverrouillage de la porte (6) est soit commandé automatiquement par l'unité de gestion (3') à réception dudit code, et éventuelle vérification de la présence du livreur (2) autorisé au niveau ou à proximité de ladite porte (6), soit commandé par une unité (8) de contrôle du moyen de verrouillage (6') après fourniture à cette unité (8) dudit code (CA) par le livreur (2) ou par son moyen de communication portable (2'), cette unité (8) ayant également réceptionné préalablement le même code transmis par le tiers extérieur (7), et,
- **en ce que** le protocole d'authentification ou d'accréditation d'un livreur (2) concerné par le dépôt ou le retrait d'un colis(1) dans l'ensemble (3) considéré, et débouchant normalement sur la transmission d'un code d'accès (CA) au moins à cet ensemble (3) et au moyen de communication portable (2') dudit livreur (2), et éventuellement aussi à l'unité (8) de contrôle du moyen de verrouillage (6') de la porte (6), est déclenché i) soit par la géolocalisation du livreur (2) au niveau ou à proximité de l'emplacement géographique de l'ensemble (3) ou de la porte (6), éventuellement confirmée par une détection de présence locale effective dudit livreur (2) devant la porte (6) considéré ou ii) soit par l'envoi de l'image d'une information visuelle cryptée (9), telle qu'un QR code, présente au niveau de la porte (6), par le moyen de communication portable (2') du livreur (2), l'envoi dudit code (CA) pouvant le cas échant être en outre conditionné à une géolocalisation du livreur (2) au niveau ou à proximité de ladite porte (6).

2. Procédé de dépôt ou de retrait d'un colis selon la revendication 1, **caractérisé en ce que** le protocole d'authentification ou d'accréditation d'un livreur (2) concerné par le dépôt ou le retrait d'un colis (1) dans l'ensemble collectif (3) considéré comprend une étape de vérification de l'acceptation dudit livreur (2) par le(s) propriétaire(s), le gestionnaire et/ou les résidents du bâtiment logeant ledit ensemble collectif (3) concerné par l'opération de livraison ou de dépôt, le dépôt ou le retrait d'un colis (1) n'étant éventuellement autoriser que durant une fenêtre temporelle quotidienne limitée, le cas échéant modifiable ou variable.

3. Procédé de dépôt ou de retrait d'un colis selon la revendication 2, **caractérisé en ce que** l'étape de vérification de l'acceptation d'un livreur (2) est réalisée par consultation d'une liste ou d'une base de données (10) tenue à jour par le tiers (7) extérieur non lié au livreur (2) et choisi dans le groupe formé par le fabricant, le gestionnaire et le propriétaire dudit ensemble (3).

4. Procédé de dépôt ou de retrait d'un colis selon l'une quelconque des revendications 1 à 3, **caractérisé en ce que** les étapes automatiques d'authentification ou d'accréditation d'un livreur (2) et de transmission d'un code d'accès unique (CA), déclenchées par géolocalisation du livreur (2) concerné et/ou par l'envoi par ce dernier de l'image d'une information visuelle cryptée (9) présente au niveau de la porte (6), sont basées sur des échanges entre la société (11) de livraison, liée au livreur (2) et communicant avec ce dernier, et le tiers (7) extérieur choisi dans le groupe formé par le fabricant, le gestionnaire et le propriétaire dudit ensemble (3), et **en ce que** ces échanges transitent par un tiers de confiance (12) distinct et indépendant de la société de livraison (11) et du tiers extérieur (7), s'effectuent en temps réel et mettent en oeuvre des interfaces de programmation d'applications (API), le code (CA) transmis étant préférentiellement à usage unique.

5. Procédé de dépôt ou de retrait d'un colis selon l'une quelconque des revendications 1 à 4, **caractérisé en ce que** le code d'accès (CA) utilisée pour le déverrouillage de la porte (6) autorise également l'accès à l'ensemble collectif (3) de boîtes à colis (4), notamment pour la sélection de la boîte (4) concernée par l'opération de dépôt ou de retrait, cet accès étant concédé soit automatiquement, soit par fourniture spécifique dudit code (CA) à l'unité de gestion (3') dudit ensemble (3), l'opération de dépôt ou de retrait devant le cas échéant être réalisée dans un délai déterminé après déverrouillage de la porte (6).

6. Procédé de dépôt ou de retrait d'un colis selon l'une quelconque des revendications 1 à 5, **caractérisé en ce qu'**il consiste, en cas de besoin ou d'attribution d'une boîte à colis (4) spécifique de l'ensemble (3) pour la réalisation d'une opération de dépôt ou de retrait d'un colis particulier, à réserver cette boîte à colis (4) spécifique et à produire un code (CA) antérieurement à l'identification et/ou à la localisation d'un livreur autorisé (2) à proximité de ladite porte (6), ladite réservation de cette boîte (4) spécifique et la production du code (CA) précité n'ayant toutefois lieu qu'après exécution favorable dudit protocole automatique d'authentification ou d'accréditation du livreur (2).

7. Système de dépôt ou de retrait d'un colis (1) par un livreur autorisé (2) dans un ensemble collectif (3) de boîtes à colis (4), préférentiellement un ensemble mixte de boîtes à lettres (4') et de boîtes à colis (4), ce système comprenant une pluralité d'ensembles collectifs (3) équipé chacun d'une unité de gestion (3') contrôlant notamment l'accès à chacune des boîtes (4) de l'ensemble (3) correspondant, chaque ensemble (3) étant situé dans un espace clos (5) accessible depuis l'extérieur par une porte (6) ou un moyen de fermeture analogue à moyen de verrouillage électrique (6'), notamment une porte d'entrée d'un immeuble,
ce système étant configuré pour la mise en oeuvre d'un procédé consistant à autoriser temporairement l'accès à une boîte à colis (4) d'un ensemble (3) déterminé pour le dépôt ou le retrait d'un colis (1) par la transmission d'un code d'accès (CA) unique et à durée de validité limitée, ce immédiatement après identification et/ou localisation d'un livreur autorisé (2) à proximité de la porte (6) ou de l'ensemble (3) concerné, ledit code (CA) étant produit et transmis par un tiers (7) extérieur non lié au livreur (2) et choisi dans le groupe formé par le fabricant, le gestionnaire et le propriétaire dudit ensemble (3), la transmission du code (CA) n'ayant lieu qu'après réalisation d'un protocole automatique d'authentification ou d'accréditation dudit livreur (2) et étant effectuée simultanément vers un moyen de communication portable (2') consultable par le livreur (2) autorisé et vers l'unité de gestion (3') dudit ensemble (3),
système **caractérisé en ce qu'**il est configuré pour la mise en oeuvre du procédé selon l'une quelconque des revendications 1 à 6, l'unité de gestion étant reliée de manière filaire au moyen de verrouillage électrique (6') de la porte (6), et le déverrouillage de cette dernière étant commandé automatiquement par l'unité de gestion (3') à réception du code (CA) adéquat, et après éventuelle vérification de la présence du livreur (2) autorisé au niveau de ladite porte (6).

8. Système de dépôt ou de retrait d'un colis (1) par un livreur autorisé (2) dans un ensemble collectif (3) de boîtes à colis (4), préférentiellement un ensemble mixte de boîtes à lettres (4') et de boîtes à colis (4), ce système comprenant une pluralité d'ensembles collectifs (3) équipé chacun d'une unité de gestion (3') contrôlant notamment l'accès à chacune des boîtes (4) de l'ensemble (3) correspondant, chaque ensemble (3) étant situé dans un espace clos (5) accessible depuis l'extérieur par une porte (6) ou un moyen de fermeture analogue à moyen de verrouillage électrique (6'), notamment une porte d'entrée d'un immeuble,
ce système étant configuré pour la mise en oeuvre d'un procédé consistant à autoriser temporairement l'accès à une boîte à colis (4) d'un ensemble (3) déterminé pour le dépôt ou le retrait d'un colis (1) par la transmission d'un code d'accès (CA) unique et à durée de validité limitée, ce immédiatement après identification et/ou localisation d'un livreur autorisé (2) à proximité de la porte (6) ou de l'ensemble (3) concerné, ledit code (CA) étant produit et transmis par un tiers (7) extérieur non lié au livreur (2) et choisi dans le groupe formé par le fabricant, le gestionnaire et le propriétaire dudit ensemble (3), la transmission du code (CA) n'ayant lieu qu'après réalisation d'un protocole automatique d'authentification ou d'accréditation dudit livreur (2) et étant effectuée simultanément vers un moyen de communication portable (2') consultable par le livreur (2) autorisé et vers l'unité de gestion (3') dudit ensemble (3),
système **caractérisé en ce qu'**il est configuré pour la mise en oeuvre du procédé selon l'une quelconque des revendications 1 à 6 et comprend, au niveau de la porte (6) associée à chaque ensemble (3), une unité (8) de contrôle du moyen de verrouillage (6') équipée d'une interface de réception dudit code (CA) saisi par le livreur (2) ou transmis par son moyen de communication portable (2'), cette unité (8) étant également configuré pour réceptionner le même code transmis par le tiers extérieur (7).

9. Système de dépôt ou de retrait d'un colis (1) selon la revendication 8, **caractérisé en ce qu'**il comprend un canal de communication, filaire ou sans fil, entre l'unité (8) de contrôle du moyen de verrouillage (6') de la porte (6), par exemple sous la forme d'un interphone, et l'unité de gestion (3') de l'ensemble (3), notamment pour la transmission d'un message d'autorisation d'accès à une boîte à colis (4), cette autorisation d'accès présentant préférentiellement une durée de validité limitée.

## Patentansprüche

1. Verfahren zum Hinterlegen oder Abholen eines Pakets (1) durch einen befugten Zusteller (2) in einer Sammeleinheit (3) von Paketkästen (4), vorzugsweise einer gemischten Einheit von Briefkästen (4') und von Paketkästen (4), die mit einer Verwaltungseinheit (3') ausgestattet ist, wobei die Einheit (3) sich in einem geschlossenen Raum (5) befindet, der von außen über eine Tür (6) oder eine analoge Schließeinrichtung zugänglich ist, die mit einer elektrisch gesteuerten Verriegelungseinrichtung (6') ausgestattet ist, insbesondere eine Eingangstür eines Gebäudes, wobei das Verfahren darin besteht, vorübergehend den Zugang zu einem Paketkasten (4) dieser Einheit (3) zum Hinterlegen oder Abholen eines Pakets (1) durch die Übertragung eines eindeutigen Codes (CA) zu genehmigen, wobei die Übertragung des Codes (CA) erst nach der Durchführung eines automatischen Authentifizierungs- oder Zulassungsprotokolls des Zustellers (2) stattfindet, und die Übertragung des Codes (CA) für die Entriegelung der Tür (6) oder dergleichen verwendet wird,
Verfahren **dadurch gekennzeichnet,**
- **dass** der Code (CA) ein Zugangscode von begrenzter Gültigkeitsdauer ist und von einem externen Dritten (7) erzeugt und übertragen wird, der nicht mit dem Zusteller (2) verbunden ist und aus der Gruppe ausgewählt wird, die vom Hersteller, vom Verwalter und vom Eigentümer der Einheit (3) gebildet wird,
- **dass** die Übertragung des Zugangscodes (CA) gleichzeitig an eine tragbare Kommunikationseinrichtung (2'), die vom befugten Zusteller (2) abgefragt werden kann, und an die Verwaltungseinheit (3') der Einheit (3) ausgeführt wird, dies direkt nach der Identifizierung und/oder Lokalisierung des befugten Zustellers (2) in der Nähe der Tür (6) oder der Einheit (3),
- **dass** die Entriegelung der Tür (6) entweder automatisch durch die Verwaltungseinheit (3') bei Empfang des Codes und eventueller Überprüfung der Anwesenheit des befugten Zustellers (2) im Bereich oder in der Nähe der Tür (6), oder von einer Kontrolleinheit (8) der Verriegelungseinrichtung (6') nach Lieferung des Codes (CA) durch den Zusteller (2) oder durch seine tragbare Kommunikationseinrichtung (2') an diese Einheit (8) gesteuert wird, wobei diese Einheit (8) ebenfalls vorher den vom externen Dritten (7) übertragenen gleichen Code empfangen hat, und
- **dass** das Authentifizierungs- oder Zulassungsprotokoll eines Zustellers (2), der vom Hinterlegen oder Abholen eines Pakets (1) in der betrachteten Einheit (3) betroffen ist, und das normalerweise zur Übertragung eines Zugangscodes (CA) mindestens an diese Einheit (3) und an die tragbare Kommunikationseinrichtung (2') des Zustellers (2) und ggf. auch an die Kontrolleinheit (8) der Verriegelungseinrichtung (6') der Tür (6) führt, i) entweder durch die Geolokalisierung des Zustellers (2) im Bereich oder in der Nähe des geographischen Standorts der Einheit (3) oder der Tür (6), ggf. bestätigt durch eine Erkennung einer tatsächlichen lokalen Anwesenheit des Zustellers (2) vor der betrachteten Tür (6), oder ii) durch das Senden des Bilds einer verschlüsselten visuellen Information (9), wie eines QR-Codes, der im Bereich der Tür (6) vorhanden ist, durch die tragbare Kommunikationseinrichtung (2') des Zustellers (2) ausgelöst wird, wobei das Senden des Codes (CA) ggf. außerdem von einer Geolokalisation des Zustellers (2) im Bereich oder in der Nähe der Tür (6) abhängig gemacht werden kann.

2. Verfahren zum Hinterlegen oder Abholen eines Pakets nach Anspruch 1, **dadurch gekennzeichnet, dass** das Authentifizierungs- oder Zulassungsprotokoll eines vom vom Hinterlegen oder Abholen eines Pakets (1) in der betrachteten Sammeleinheit (3) betroffenen Zustellers (2) einen Schritt der Überprüfung der Akzeptierung des Zustellers (2) durch den(die) Eigentümer, den Verwalter und/oder die Bewohner des Gebäudes enthält, in dem die vom Vorgang des Zustellens oder des Hinterlegens betroffene Sammeleinheit (3) untergebracht ist, wobei das Hinterlegen oder das Abholen eines Pakets (1) ggf. nur während eines begrenzten täglichen Zeitfensters, ggf. änderbar oder variabel, genehmigt wird.

3. Verfahren zum Hinterlegen oder Abholen eines Pakets nach Anspruch 2, **dadurch gekennzeichnet, dass** der Schritt der Überprüfung der Akzeptierung eines Zustellers (2) durch Abfrage einer Liste oder einer Datenbank (10) durchgeführt wird, die vom externen Dritten (7) auf dem neuesten Stand gehalten wird, der nicht mit dem Zusteller (2) verbunden ist und aus der Gruppe ausgewählt wird, die vom Hersteller, vom Verwalter und vom Eigentümer der Einheit (3) gebildet wird.

4. Verfahren zum Hinterlegen oder Abholen eines Pakets nach einem der Ansprüche 1 bis 3, **dadurch gekennzeichnet, dass** die automatischen Schritte der Authentifizierung oder der Zulassung eines Zustellers (2) und der Übertragung eines eindeutigen Zugangscodes (CA), ausgelöst durch Geolokalisierung des betroffenen Zustellers (2) und/oder durch das Senden durch diesen letzteren des Bilds einer verschlüsselten visuellen Information (9), die im Bereich der Tür (6) vorhanden ist, auf Austauschvorgängen zwischen der Zustellungsfirma (11), die mit dem Zusteller (2) verbunden ist und mit diesem letzteren kommuniziert, und dem externen Dritten (7) basieren, der aus der Gruppe ausgewählt wird, die vom Hersteller, vom Verwalter und vom Eigentümer der Einheit (3) gebildet wird, und dass diese Austauschvorgänge, die über einen vertrauenswürdigen Dritten (12) gehen, der sich von der Zustellungsfirma (11) und vom externen Dritten (7) unterscheidet und davon unabhängig ist, in Echtzeit ausgeführt werden und Programmierungsschnittstellen von Anwendungen (API) verwenden, wobei der übertragene Code (CA) vorzugsweise zum einmaligen Gebrauch ist.

5. Verfahren zum Hinterlegen oder Abholen eines Pakets nach einem der Ansprüche 1 bis 4, **dadurch gekennzeichnet, dass** der für die Entriegelung der Tür (6) verwendete Zugangscode (CA) ebenfalls den Zugang zur Sammeleinheit (3) von Paketkästen (4) genehmigt, insbesondere zur Auswahl des vom Vorgang des Hinterlegens oder Abholens betroffenen Kastens (4), wobei dieser Zugang entweder automatisch oder durch spezielle Lieferung des Codes (CA) an die Verwaltungseinheit (3') der Einheit (3) gewährt wird, wobei der Vorgang des Hinterlegens oder Abholens ggf. in einem bestimmten Zeitraum nach der Entriegelung der Tür (6) durchgeführt werden muss.

6. Verfahren zum Hinterlegen oder Abholen eines Pakets nach einem der Ansprüche 1 bis 5, **dadurch gekennzeichnet, dass** es im Fall eines Bedarfs oder einer Zuweisung eines spezifischen Paketkastens (4) der Einheit (3) für die Durchführung eines Vorgangs des Hinterlegens oder Abholens eines besonderen Pakets darin besteht, diesen spezifischen Paketkasten (4) zu reservieren und vor der Identifizierung und/oder der Lokalisierung eines befugten Zustellers (2) in der Nähe der Tür (6) einen Code (CA) zu erzeugen, wobei die Reservierung dieses spezifischen Kastens (4) und die Erzeugung des erwähnten Codes (CA) aber erst nach der positiven Ausführung des automatischen Authentifizierungs- oder Zulassungsprotokolls des Zustellers (2) stattfindet.

7. System zum Hinterlegen oder Abholen eines Pakets (1) durch einen befugten Zusteller (2) in einer Sammeleinheit (3) von Paketkästen (4), vorzugsweise einer gemischten Einheit von Briefkästen (4') und von Paketkästen (4), wobei dieses System eine Vielzahl von Sammeleinheiten (3) enthält, die je mit einer Verwaltungseinheit (3') ausgestattet sind, die insbesondere den Zugang zu jedem der Kästen (4) der entsprechenden Einheit (3) kontrolliert, wobei jede Einheit (3) sich in einem geschlossenen Raum (5) befindet, der von außen durch eine Tür (6) oder eine analoge Schließeinrichtung mit elektrischer Verriegelungseinrichtung (6') zugänglich ist, insbesondere eine Eingangstür eines Gebäudes, wobei dieses System für die Durchführung eines Verfahrens konfiguriert ist, das darin besteht, vorübergehend den Zugang zu einem Paketkasten (4) einer bestimmten Einheit (3) zum Hinterlegen oder Abholen eines Pakets (1) durch die Übertragung eines eindeutigen und zeitlich begrenzt gültigen Zugangscodes (CA) zu genehmigen, dies unmittelbar nach Identifizierung und/oder Lokalisierung eines befugten Zustellers (2) in der Nähe der Tür (6) oder der betroffenen Einheit (3), wobei der Code (CA) von einem externen Dritten (7) erzeugt oder übertragen wird, der nicht mit dem Zusteller (2) verbunden ist und aus der Gruppe ausgewählt wird, die vom Hersteller, vom Verwalter und vom Eigentümer der Einheit (3) gebildet wird, wobei die Übertragung des Codes (CA) erst nach der Durchführung eines automatischen Authentifizierungs- oder Zulassungsprotokolls des Zustellers (2) stattfindet und gleichzeitig zu einer vom befugten Zusteller (2) abrufbaren tragbaren Kommunikationseinrichtung (2') und zur Verwaltungseinheit (3') der Einheit (3) ausgeführt wird,
System **dadurch gekennzeichnet, dass** es für die Durchführung des Verfahrens nach einem der Ansprüche 1 bis 6 konfiguriert ist, wobei die Verwaltungseinheit mit der elektrischen Verriegelungseinrichtung (6') der Tür (6) über Kabel verbunden ist, und die Entriegelung dieser letzteren von der Verwaltungseinheit (3') bei Empfang des geeigneten Codes (CA) und nach eventueller Überprüfung der Anwesenheit des befugten Zustellers (2) im Bereich der Tür (6) automatisch gesteuert wird.

8. System zum Hinterlegen oder Abholen eines Pakets (1) durch einen befugten Zusteller (2) in einer Sammeleinheit (3) von Paketkästen (4), vorzugsweise einer gemischten Einheit von Briefkästen (4') und von Paketkästen (4), wobei dieses System eine Vielzahl von Sammeleinheiten (3) enthält, die je mit einer Verwaltungseinheit (3') ausgestattet sind, die insbesondere den Zugang zu jedem der Kästen (4) der entsprechenden Einheit (3) kontrolliert, wobei jede Einheit (3) sich in einem geschlossenen Raum (5) befindet, der von außen durch eine Tür (6) oder eine analoge Schließeinrichtung mit elektrischer Verriegelungseinrichtung (6') zugänglich ist, insbesondere eine Eingangstür eines Gebäudes,
wobei dieses System für die Durchführung eines Verfahrens konfiguriert ist, das darin besteht, vorübergehend den Zugang zu einem Paketkasten (4) einer bestimmten Einheit (3) zum Hinterlegen oder Abholen eines Pakets (1) durch die Übertragung eines eindeutigen und zeitlich begrenzt gültigen Zugangscodes (CA) zu genehmigen, dies unmittelbar nach Identifizierung und/oder Lokalisierung eines befugten Zustellers (2) in der Nähe der Tür (6) oder der betroffenen Einheit (3), wobei der Code (CA) von einem externen Dritten (7) erzeugt oder übertragen wird, der nicht mit dem Zusteller (2) verbunden ist und aus der Gruppe ausgewählt wird, die vom Hersteller, vom Verwalter und vom Eigentümer der Einheit (3) gebildet wird, wobei die Übertragung des Codes (CA) erst nach der Durchführung eines automatischen Authentifizierungs- oder Zulassungsprotokolls des Zustellers (2) stattfindet und gleichzeitig zu einer vom befugten Zusteller (2) abrufbaren tragbaren Kommunikationseinrichtung (2') und zur Verwaltungseinheit (3') der Einheit (3) ausgeführt wird,
System **dadurch gekennzeichnet, dass** es für die Durchführung des Verfahrens nach einem der Ansprüche 1 bis 6 konfiguriert ist und im Bereich der jeder Einheit (3) zugeordneten Tür (6) eine Kontrolleinheit (8) der Verriegelungseinrichtung (6') enthält, die mit einer Empfangsschnittstelle des Codes (CA) ausgestattet ist, der vom Zusteller (2) eingegeben oder von seiner tragbaren Kommunikationseinrichtung (2') übertragen wird, wobei diese Einheit (8) ebenfalls konfiguriert ist, um den vom externen Dritten (7) übertragenen gleichen Code zu empfangen.

9. System zum Hinterlegen oder Abholen eines Pakets (1) nach Anspruch 8, **dadurch gekennzeichnet, dass** es einen drahtgebundenen oder drahtlosen Kommunikationskanal zwischen der Kontrolleinheit (8) der Verriegelungseinrichtung (6') der Tür (6), zum Beispiel in Form einer Gegensprechanlage, und der Verwaltungseinheit (3') der Einheit (3) enthält, insbesondere für die Übertragung einer Zugangsgenehmigungsnachricht zu einem Paketkasten (4), wobei diese Zugangsgenehmigung vorzugsweise eine begrenzte Gültigkeitsdauer aufweist.

## Claims

1. Method allowing an authorized delivery person (2) to drop off or pick up a parcel (1) in a collective set (3) of parcel boxes (4), preferably a mixed set of letterboxes (4') and parcel boxes (4), equipped with a management unit (3'), said set (3) being located in an enclosed space (5) accessible from the outside by way of a door (6) or a similar closing means equipped with an electrically controlled locking means (6'), in particular an entrance door to a building, said method consisting in temporarily authorizing access to a parcel box (4) of this set (3) in order to drop off or pick up a parcel (1) by transmitting a unique code (CA), the code (CA) being transmitted only after an automatic protocol for authenticating or accrediting said delivery person (2) has been carried out, and the transmission of the code (CA) being used to unlock the door (6) or the like,
which method is **characterized**
- **in that** said code (CA) is an access code with a limited validity duration and that is produced and transmitted by an external third party (7) not related to the delivery person (2) and chosen from the group consisting of the manufacturer, the manager and the owner of said set (3),
- **in that** said access code (CA) is transmitted simultaneously to a portable communication means (2') able to be consulted by the authorized delivery person (2) and to the management unit (3') of said set (3), immediately after said authorized delivery person (2) has been identified and/or located close to said door (6) or said set (3),
- **in that** the unlocking of the door (6) is either controlled automatically by the management unit (3') upon reception of said code, and possibly checking that the authorized delivery person (2) is present at or close to said door (6), or controlled by a control unit (8) for controlling the locking means (6') after said code (CA) has been provided to this unit (8) by the delivery person (2) or by their portable communication means (2'), this unit (8) also having received, beforehand, the same code transmitted by the external third party (7), and
- **in that** the protocol for authenticating or accrediting a delivery person (2) involved in dropping off or picking up a parcel (1) in the set (3) under consideration, and normally leading to the transmission of an access code (CA) at least to this set (3) and to the portable communication means (2') of said delivery person (2), and possibly also to the control unit (8) for controlling the locking means (6') of the door (6), is triggered i) either by the geolocation of the delivery person (2) at or close to the geographical location of the set (3) or of the door (6), possibly confirmed by detection that said delivery person (2) is actually locally present in front of the door (6) under consideration, or ii) by sending the image of encrypted visual information (9), such as a QR code, present on the door (6) using the portable communication means (2') of the delivery person (2), the sending of said code (CA) possibly, where applicable, furthermore being conditional upon a geolocation of the delivery person (2) at or close to said door (6).

2. Method for dropping off or picking up a parcel according to Claim 1, **characterized in that** the protocol for authenticating or accrediting a delivery person (2) involved in dropping off or picking up a parcel (1) in the collective set (3) under consideration comprises a step of checking that the one or more owners, the manager and/or the residents of the building housing said collective set (3) involved in the delivery or drop-off operation accept said delivery person (2), the dropping off or the picking up of a parcel (1) possibly being authorized only during a limited daily time window that is, where applicable, able to be modified or varied.

3. Method for dropping off or picking up a parcel according to Claim 2, **characterized in that** the step of checking whether a delivery person (2) is accepted is carried out by consulting a list or a database (10) kept up to date by the external third party (7) not related to the delivery person (2) and chosen from the group consisting of the manufacturer, the manager and the owner of said set (3).

4. Method for dropping off or picking up a parcel according to any one of Claims 1 to 3, **characterized in that** the automatic steps of authenticating or accrediting a delivery person (2) and of transmitting a unique access code (CA), triggered by geo-locating the delivery person (2) involved and/or by said delivery person sending the image of encrypted visual information (9) present on the door (6), are based on exchanges between the delivery company (11), linked to the delivery person (2) and communicating with them, and the external third party (7) chosen from the group consisting of the manufacturer, the manager and the owner of said set (3), and **in that** these exchanges transit via a trusted third party (12) distinct and independent from the delivery company (11) and from the external third party (7), take place in real time and employ application programming interfaces (API), the transmitted code (CA) preferably being a single-use code.

5. Method for dropping off or picking up a parcel according to any one of Claims 1 to 4, **characterized in that** the access code (CA) used to unlock the door (6) also authorizes access to the collective set (3) of parcel boxes (4), in particular in order to select the box (4) involved in the drop-off or pickup operation, this access code being conceded either automatically or by specifically providing said code (CA) to the management unit (3') of said set (3), the drop-off or pickup operation, where applicable, having to be carried out within a determined period after the door (6) has been unlocked.

6. Method for dropping off or picking up a parcel according to any one of Claims 1 to 5, **characterized in that** it consists, when necessary or in the case of assignment of a specific parcel box (4) of the set (3) for carrying out an operation of dropping off or picking up a particular parcel, in reserving this specific parcel box (4) and in producing a code (CA) following the identification and/or the location of an authorized delivery person (2) close to said door (6), said reservation of this specific box (4) and the production of the abovementioned code (CA) however taking place only after said automatic protocol for authenticating or accrediting the delivery person (2) has been executed favourably.

7. System allowing an authorized delivery person (2) to drop off or pick up a parcel (1) in a collective set (3) of parcel boxes (4), preferably a mixed set of letterboxes (4') and parcel boxes (4), this system comprising a plurality of collective sets (3) each equipped with a management unit (3') controlling in particular access to each of the boxes (4) of the corresponding set (3), each set (3) being located in an enclosed space (5) accessible from the outside by way of a door (6) or a similar closing means with an electric locking means (6'), in particular an entrance door to a building,
this system being configured to implement a method consisting in temporarily authorizing access to a parcel box (4) of a given set in order to drop off or pick up a parcel (1) by transmitting a unique access code (CA) with a limited validity duration, immediately after an authorized delivery person (2) has been identified and/or located close to the door (6) or the set (3) in question, said code (CA) being produced and transmitted by an external third party (7) not related to the delivery person (2) and chosen from the group consisting of the manufacturer, the manager and the owner of said set (3), the transmission of the code (CA) taking place only after an automatic protocol for authenticating or accrediting said delivery person (2) has been carried out and being carried out simultaneously to a portable communication means (2') able to be consulted by the authorized delivery person (2) and to the management unit (3') of said set (3),
which system is **characterized in that** it is configured to implement the method according to any one of Claims 1 to 6, the management unit being connected in wired form to the electric locking means (6') of the door (6), and the unlocking of said door being controlled automatically by the management unit (3') upon receipt of the appropriate code (CA), and after possible checking of the presence of the authorized delivery person (2) at said door (6).

8. System allowing an authorized delivery person (2) to drop off or pick up a parcel (1) in a collective set (3) of parcel boxes (4), preferably a mixed set of letterboxes (4') and parcel boxes (4), this system comprising a plurality of collective sets (3) each equipped with a management unit (3') controlling in particular access to each of the boxes (4) of the corresponding set (3), each set (3) being located in an enclosed space (5) accessible from the outside by way of a door (6) or a similar closing means with an electric locking means (6'), in particular an entrance door to a building,
this system being configured to implement a method consisting in temporarily authorizing access to a parcel box (4) of a given set in order to drop off or pick up a parcel (1) by transmitting a unique access code (CA) with a limited validity duration, immediately after an authorized delivery person (2) has been identified and/or located close to the door (6) or the set (3) in question, said code (CA) being produced and transmitted by an external third party (7) not related to the delivery person (2) and chosen from the group consisting of the manufacturer, the manager and the owner of said set (3), the transmission of the code (CA) taking place only after an automatic protocol for authenticating or accrediting said delivery person (2) has been carried out and being carried out simultaneously to a portable communication means (2') able to be consulted by the authorized delivery person (2) and to the management unit (3') of said set (3),
which system is **characterized in that** it is configured to implement the method according to any one of Claims 1 to 6 and comprises, on the door (6) associated with each set (3), a control unit (8) for controlling the locking means (6'), equipped with an interface for receiving said code (CA) entered by the delivery person (2) or transmitted by their portable communication means (2'), this unit (8) also being configured to receive the same code transmitted by the external third party (7).

9. System for dropping off or picking up a parcel (1) according to Claim 8, **characterized in that** it comprises a wired or wireless communication channel between the control unit (8) for controlling the locking means (6') of the door (6), for example in the form of an intercom, and the management unit (3') of the set (3), in particular for transmitting an access authorization message to a parcel box (4), this access authorization preferably having a limited validity duration.
